# EUROPÄISCHE PATENTSCHRIFT

(11) **EP 3 338 030 B1**
(45) Veröffentlichungstag und Bekanntmachung des Hinweises auf die Patenterteilung: **18.12.2019**
(21) Anmeldenummer: 16747897.3
(22) Anmeldetag: 05.08.2016
(51) Int. Cl.: F24C 15/20

(54) **KOMBINATIONSGERÄT MIT KOCHFELD UND DUNSTABZUGSVORRICHTUNG MIT FILTEREINHEIT**
COMBINED DEVICE WITH COOKING HOB AND VAPOUR EXTRACTION DEVICE WITH FILTER UNIT
APPAREIL COMBINÉ AVEC PLAQUE DE CUISSON ET DISPOSITIF D'EVACUATION DES FUMÉES AVEC UNITÉ DE FILTRATION

(30) Priorität: 19.08.2015 EP 15290205
(43) Veröffentlichungstag der Anmeldung: 27.06.2018
(73) Patentinhaber: BSH Hausgeräte GmbH, 81739 München (DE)
(72) Erfinder: ADAM, Julien, 67380 Lingolsheim (FR); CHABUT, Nicolas, 67140 Gertwiller (FR); FLESCH, Sebastien, 67150 Gerstheim (FR)
(86) Internationale Anmeldenummer: PCT/EP2016/068806
(87) Internationale Veröffentlichungsnummer: WO 2017/029138

(56) Entgegenhaltungen:
- DE-A1-102005 019 830
- US-A- 5 001 970
- US-B1- 6 455 818
- US-B1- 6 569 008

## Beschreibung

Die vorliegende Erfindung betrifft ein Kombinationsgerät mit Kochfeld und Dunstabzugsvorrichtung mit einer Filtereinheit.

In Küchen ist es bekannt, statt Dunstabzugshauben, die über einem Kochfeld beispielsweise an der Raumwand oder Decke angeordnet werden, sogenannte Muldenlüfter zu verwenden, um Dünste und Wrasen, die beim Kochen entstehen, abzusaugen. In der DE 10 2013 007 722 A1 ist beispielsweise eine solche Muldenlüftung beschrieben. Hierbei wird eine in der Kochfeldebene gelegene Kochdampf-Eintrittsöffnung über ein Abluftkanalsystem mit einer Unterdruckquelle verbunden. Die Muldenlüftung wird hierbei als separates Gerät zwischen zwei Kochfeldern oder neben einem Kochfeld vorgesehen. Um den Eintritt von Flüssigkeiten in die Unterdruckquelle zu verhindern, ist es bekannt in dem Ablauftkanalsystem ein Filterelement anzuordnen, und unter dem Filterelement eine Wanne zum Auffangen von Flüssigkeiten und sonstigen Verunreinigungen vorzusehen. Ein Nachteil dieser bekannten Filteranordnung ist, dass Flüssigkeit, die in die Kochdampf-Eintrittsöffnung eintritt, durch das Filterelement hindurchtreten muss, bevor diese zu der Wanne gelangt.

Weiterhin ist aus der WO 2012/146237 A1 ein Kochfeld mit zentraler Absaugung von Kochdünsten nach unten bekannt. Bei diesem Kochfeld wird einer oder werden mehrere Aussparungen im Bereich um den geometrischen Flächenschwerpunkt eingebracht. Unterhalb des Kochfeldes sind Vorrichtungen zum Abzug von Küchendünsten vorgesehen. Die Vorrichtungen zum Abzug von Küchendünsten stellen vorzugsweise Radiallüfter dar, die an der Unterseite eines Kochfeldgehäuses befestigt sind und über die Luft aus unten liegenden Kochdunstabsaugkammern nach oben abgesaugt werden. In die Aussparung kann ein Fettfilter-Einsatz eingebracht werden, dessen seitlichen Wände für Kochdünste durchlässig sind und dessen Boden eine Auffangschale bildet. Bei diesem Fettfiltereinsatz kann die Auffangschale zwar zur Aufnahme von Flüssigkeiten dienen, bei Erreichen eines Füllstandes der Auffangschale, der größer als dessen Höhe ist, wird die Flüssigkeit aber wieder in das Filtermaterial eindringen.

Weiterhin beschreibt die US 6,455,818 B1 eine Downdraft-Filteranordnung für eine Kochvorrichtung. Das Filtersystem umfasst eine Filteranordnung, die unmittelbar unter einem Luftgitter, das zu einem Lüftungsraum führt, angeordnet ist. In der Filteranordnung ist ein Einsatz vorgesehen, in den ein Filterelement eingebracht ist. Ein Nachteil dieser Filteranordnung besteht darin, dass Verunreinigungen und Flüssigkeiten, die über das Luftgitter eintreten das Filterelement unmittelbar erreichen und dieses gegebenenfalls verunreinigen.

Aufgabe der vorliegenden Erfindung ist es daher eine Lösung zu schaffen, mittels derer eine Filtereinheit sowohl zum Filtern von Verunreinigungen und Flüssigkeiten aus Dünsten und Wrasen als auch zur Aufnahme oder Leitung von größeren Flüssigkeitsmengen geeignet ist und insbesondere in einem Kombinationsgerät aus Dunstabzugsvorrichtung und Kochfeld eine optimierte Flüssigkeitsführung bei weiterhin guter Reinigung der Dünste und Wrasen durch das Filterelement sichergestellt ist.

Der Erfindung liegt die Erkenntnis zugrunde, dass diese Aufgabe gelöst werden kann, indem eine Filtereinheit geschaffen wird, bei der ein Sammelbereich für Flüssigkeiten vorgesehen ist, der von dem Filtermaterial des Filterelementes nicht abgedeckt wird und vorzugsweise zumindest einen Überlauf aufweist, der zu dem Filterelement beabstandet ist.

Die Aufgabe wird daher gelöst durch ein Kombinationsgerät mit einem Kochfeld und einer unterhalb des Kochfeldes angeordneten Dunstabzugsvorrichtung, und zumindest einer Filtereinheit für die Dunstabzugsvorrichtung, die mindestens einen Filterkörper mit mindestens einem Filterelement und mindestens einen Sammelbereich für Flüssigkeiten umfasst. Die Filtereinheit ist dadurch gekennzeichnet, dass sie eine Abdeckung aufweist, die zumindest den zumindest einen Filterkörper nach oben abdeckt und an der Filtereinheit im oberen Bereich eine Lufteinlassöffnung gebildet ist, die zum Einlass von Luft, die von der Dunstabzugsvorrichtung angesaugt wird, dient, dass in der Unterseite der Filtereinheit eine Luftauslassöffnung vorgesehen ist, die zum Auslass von Luft von der Filtereinheit zu der Dunstabzugsvorrichtung dient, wobei der Filterkörper des Filterelementes so angeordnet ist, dass sich dieser zwischen der Lufteinlassöffnung und der Luftauslassöffnung erstreckt und dass der Sammelbereich unterhalb des mindestens einen Filterkörpers liegt und den mindestens einen Filterkörper zumindest teilweise umgibt.

Richtungsangaben, wie beispielsweise oben oder unten, die die Filtereinheit oder Teile davon betreffen, beziehen sich, soweit nicht anders angegeben, auf die Filtereinheit in einem eingebauten Zustand, in dem die Filtereinheit in eine horizontal liegende Öffnung eines Gerätes, das eine Dunstabzugsvorrichtung umfasst, insbesondere in eine horizontal liegende Aussparung eines Kochfeldes eingebracht ist. Die Oberseite der Filtereinheit stellt daher die Ansaugseite und die Unterseite der Filtereinheit die Reinluftseite dar. Als Oberseite der Filtereinheit wird vorzugsweise der Bereich verstanden, an dem die Filtereinheit an der Öffnung des Gerätes mit Dunstabzugsvorrichtung, insbesondere der Aussparung des Kochfeldes anliegt. An der Oberseite der Filtereinheit kann vorzugsweise eine Befestigungsvorrichtung zur Befestigung der Filtereinheit an einer Öffnung des Gerätes mit Dunstabzugsvorrichtung, insbesondere einer Aussparung in einem Kochfeld vorgesehen sein. Die Befestigungsvorrichtung kann auch als Einhängevorrichtung bezeichnet werden und kann beispielsweise eine Abkantung oder einen Steg darstellen. Es liegt aber auch im Rahmen der Erfindung, dass die Filtereinheit im oberen Bereich nur mit deren Außenseite an dem inneren Umfang an der Öffnung des Gerätes mit Dunstabzugsvorrichtung, insbesondere der Aussparung des Kochfeldes anliegt und die Unterseite der Filtereinheit auf einem Bauteil im Inneren des Gerätes, insbesondere unterhalb des Kochfeldes aufliegt.

Als Dunstabzugsvorrichtung wird erfindungsgemäß eine Vorrichtung bezeichnet, mittels derer Luft und insbesondere beim Kochen entstehende Dünste und Wrasen von einem Raum oberhalb eines Kochfeldes abgesaugt werden können. Die Dunstabzugsvorrichtung weist mindestens ein Gebläse auf. Das Gebläse, das auch als Lüfter oder Sauggebläse bezeichnet werden kann, umfasst vorzugsweise ein Gebläsegehäuse, das beispielsweise als Spiralgehäuse oder Schneckengehäuse ausgestaltet ist und auch als Lüftergehäuse bezeichnet werden kann. In dem Gebläsegehäuse ist ein Lüfterrad aufgenommen, das über einen ebenfalls in dem Gebläsegehäuse aufgenommenen Motor angetrieben wird. Das Gebläsegehäuse weist eine Lufteintrittsöffnung auf, über die angesaugte Luft zu dem Lüfterrad gelangen kann. Weiterhin weist das Lüftergehäuse eine Luftaustrittsöffnung auf, über die Luft radial ausgelassen werden kann. Bei einem Gebläse, das ein Radialgebläse darstellt, liegt die Lufteintrittsöffnung vorzugsweise im Bereich der Achse des Lüfterrades.

Als Filtereinheit wird vorzugsweise eine Fettfiltereinheit bezeichnet, über die Fette und andere Verunreinigungen, insbesondere Flüssigkeiten aus der Luft abgeschieden werden können. Zu diesem Zweck umfasst die Filtereinheit erfindungsgemäß mindestens einen Filterkörper mit mindestens einem Filterelement. Das Filterelement kann aus Streckmetalllagen, geflochtenen oder gewirkten Metallfäden oder aus anderen Filtermaterialien bestehen. Gemäß der vorliegenden Erfindung können ein oder mehrere Filterelemente in der Filtereinheit enthalten sein. Im Folgenden wird die Erfindung im Wesentlichen unter Bezugnahme auf ein Filterelement beschrieben, wobei die dabei gemachten Ausführungen - soweit nicht anders angegeben - auch für mehrere Filterelemente gelten.

Als Filterkörper der Filtereinheit wird erfindungsgemäß eine Kontur oder ein Bauteil verstanden, das sich zumindest bereichsweise über die Höhe der Filtereinheit erstreckt und das einen Innenraum zumindest an zwei Seiten begrenzt. Vorzugsweise ist der Filterkörper nach oben abgeschlossen und nach unten offen. Der Filterkörper kann daher beispielsweise ein Rahmen sein, der einen V-förmigen oder U-förmigen Querschnitt aufweist und bei dem Öffnungen in einem der beiden Schenkel der V-Form oder U-Form oder in beiden Schenkeln Filterelemente eingesetzt sind. Alternativ kann auch ein rohrförmiger Filterkörper verwendet werden, dessen Längsachse in der Höhenrichtung der Filtereinheit liegt und dessen Mantelfläche zumindest teilweise durch ein Filterelement gebildet wird. Weiterhin ist es auch möglich einen Filterkörper zu verwenden, der einen rechteckigen Querschnitt aufweist und zumindest nach unten offen ist und bei dem zumindest eine der Außenwände durch ein Filterelement gebildet wird. Die weiteren Bereiche der Mantelflächen oder Außenflächen werden dann durch luftundurchlässiges Material gebildet. Bei einem rohrförmigen Filterkörper oder Filterkörper mit rechteckigem Querschnitt ist vorzugsweise die Oberseite des Filterkörpers verschlossen. Dies kann durch einen Bereich des Filterkörpers oder durch eine separate Abdeckung erfolgen.

Erfindungsgemäß weist die Filtereinheit mindestens einen Sammelbereich für Flüssigkeiten auf. Als Sammelbereich wird hierbei eine Kontur oder ein Teil der Filtereinheit bezeichnet, in dem Flüssigkeiten aus dem oder den Filterelementen und/oder Flüssigkeiten, die von oben in die Filtereinheit hereintropfen, aufgefangen werden. Der Sammelbereich wird im Folgenden auch als Sammelbehälter bezeichnet. Der Sammelbereich kann als separates Bauteil ausgestaltet sein, das mit dem Filterkörper verbunden werden kann. Auch zu einer Filterhalterung mittels derer die Filtereinheit an dem Gerät mit Dunstabzugsvorrichtung gehalten werden kann, kann der Sammelbereich ein separates Bauteil darstellen. Vorzugsweise ist aber der Sammelbereich zumindest mit einer Filterhalterung einteilig ausgestaltet, das heißt bildet einen Teil der Filterhalterung. Auch mit dem Filterkörper, insbesondere bei der Ausführungsform, bei der der Filterkörper einen Rahmen oder Wände aus luftundurchlässigem Material aufweist, kann der Sammelbereich mit dem Filterkörper und insbesondere dessen Bereichen, die aus luftundurchlässigem Material bestehen, einteilig ausgebildet sein.

An der Filtereinheit ist im oberen Bereich eine Lufteinlassöffnung gebildet ist, die zum Einlass von Luft, die von der Dunstabzugsvorrichtung angesaugt wird, dient. Die Lufteinlassöffnung liegt dabei vorzugsweise in der Oberseite der Filtereinheit kann aber auch leicht nach unten zu der Oberseite versetzt in der Filtereinheit liegen. Die eingesaugte Luft strömt somit bei der erfindungsgemäßen Luft von oben in die Filtereinheit. Die Lufteinlassöffnung umgibt den mindestens einen Filterkörper zumindest teilweise. Insbesondere liegt die Lufteinlassöffnung in vertikaler Projektion der Lufteinlassöffnung auf den Filterkörper außerhalb des Filterkörpers.

Zudem ist in der Unterseite der Filtereinheit eine Luftauslassöffnung vorgesehen, die zum Auslass von Luft von der Filtereinheit zu der Dunstabzugsvorrichtung dient.

Der Sammelbereich liegt erfindungsgemäß unterhalb des mindestens einen Filterkörpers und umgibt den mindestens einen Filterkörper zumindest teilweise. Der Sammelbereich ist dabei vorzugsweise unterhalb einer Unterkante des Filterkörpers angeordnet. Unterhalb bedeutet in diesem Zusammenhang, dass der Sammelbereich in vertikaler Richtung unter der Unterkante des Filterkörpers liegt, das heißt nach unten versetzt ist. Erfindungsgemäß kann der Sammelbereich auch in horizontaler Richtung unter dem Filterkörper und insbesondere einer Unterkante des Filterkörpers liegen, das heißt die vertikaler Projektion der Unterkante des Filterkörpers auf den Sammelbereich vorzugsweise in der Fläche des Sammelbereiches liegen. Durch diese Anordnung des Sammelbereiches kann eine Reihe von Vorteilen erzielt werden. Insbesondere kann durch die Anordnung des Sammelbereiches, der sowohl in vertikaler als auch in horizontaler Richtung unter dem Filterkörper liegt, gewährleistet werden, dass Flüssigkeiten, die aus dem oder den Filterelementen des Filterkörpers austreten, das heißt abtropfen, zu dem Sammelbereich gelangen können. Alternativ ist es aber auch möglich, dass die vertikale Projektion der Unterkante des Filterkörpers außerhalb des Sammelbereiches zu diesem benachbart liegt.

Da der Sammelbereich den Filterkörper zumindest teilweise umgibt, das heißt in vertikaler Draufsicht zumindest teilweise außerhalb des Filterkörpers oder benachbart zu dem Filterkörper um dieses herum angeordnet ist, und die Lufteintrittsöffnung ebenfalls außerhalb des Filterkörpers um diesen herum vorgesehen ist, ist der Sammelbereich damit auch für Flüssigkeiten zugänglich, die nicht aus den Filterelementen des Filterkörpers stammen. Der Sammelbereich liegt vorzugsweise zumindest bereichsweise unter der Lufteinlassöffnung. Somit können somit Flüssigkeiten in dem Sammelbehälter aufgefangen werden, die über die Lufteinlassöffnung der Filtereinheit in die Filtereinheit hereintropfen aber das oder die Filterelemente nicht erreichen. Zudem ist durch die Anordnung des Sammelbereichs außerhalb des Filterkörpers auch die Möglichkeit gegeben die in dem Sammelbereich gesammelte Flüssigkeit aus dem Sammelbereich abzuleiten, ohne, dass diese durch den Filterkörper und insbesondere das oder die Filterelemente des Filterkörpers hindurch erfolgen muss, wie dies im Stand der Technik der Fall ist.

Gemäß einer bevorzugten Ausführungsform liegt das mindestens eine Filterelement in der Filtereinheit in einer Richtung, die zu der Horizontalen geneigt ist. Diese Ausführungsform weist den Vorteil auf, dass Flüssigkeiten, die in dem Filterelement ausgefiltert werden, aufgrund der Ausrichtung des Filterelementes zu dessen Unterkante laufen und von dort zuverlässig in den Sammelbereich gelangen können.

Besonders bevorzugt liegt das Filterelement oder liegen die Filterelemente in der Filtereinheit in vertikaler Richtung. Diese Ausführungsform weist den Vorteil auf, dass die Filterfläche der Filterelemente in der Vertikalen liegt und somit nicht von Flüssigkeiten, die von oben über die Lufteinlassöffnung in die Filtereinheit hereintropfen, erreicht werden können. Zudem kann die Filterfläche für eine vorgegebene Größe einer Öffnung in einem Gerät mit Dunstabzugsvorrichtung, in die die Filtereinheit eingebracht wird, durch diese Ausrichtung maximiert werden.

Gemäß einer bevorzugten Ausführungsform bildet der Filterkörper einen zumindest nach unten offenen Hohlkörpers. Unter Hohlkörper wird erfindungsgemäß ein Körper verstanden, der aus einer Außenwand besteht, die auch als Außenfläche oder Mantelfläche bezeichnet werden kann, und der zumindest an der Unterseite offen ist. Der Hohlkörper kann auch als Rohrstück oder Profilstück bezeichnet werden, wobei der Querschnitt des Rohrstücks oder Profilstücks beispielsweise rund oder mehreckig, insbesondere viereckig sein kann. Das mindestens eine Filterelement liegt hierbei in dem Filterkörper vorzugsweise in der Vertikalen. Das oder die Filterelemente können hierbei die gesamte Mantelfläche oder Außenfläche des Hohlkörpers bilden. Es liegt allerdings auch im Rahmen der Erfindung, dass das oder die Filterelemente nur einen Teil der Mantel- oder Außenfläche des Hohlkörpers bilden und die weiteren Teile des Hohlkörpers durch Platten oder Rahmen gebildet werden, die aus einem luftundurchlässigen Material bestehen. Indem der Filterkörper einen Hohlkörper bildet, der zumindest teilweise durch mindestens eines der Filterelemente gebildet wird, das vorzugweise in der vertikalen Richtung liegt, und der nach unten offen ist, kann Luft über die Mantel- oder Außenflächen des Hohlkörpers eingesogen werden und die Filterfläche für eine vorgegebene Größe einer Aussparung, in die die Filtereinheit eingebracht wird, ist dadurch weiter vergrößert.

Der Querschnitt des als Hohlkörpers gebildeten Filterkörpers kann erfindungsgemäß rund oder viereckig sein. Die Form des Hohlkörpers wird hierbei vorzugsweise nach der Form der Öffnung in dem Gerät mit Dunstabzugsvorrichtung und insbesondere der Aussparung eines Kochfeldes, in die die Filtereinheit eingebracht wird, gewählt.

Besonders bevorzugt umgibt bei der Ausgestaltung der Filtereinheit mit einem Hohlkörper als Filterkörper, der zumindest teilweise durch eines der Filterelemente gebildet wird, der Hohlkörper die Luftauslassöffnung der Filtereinheit. Hierdurch kann die durch die Filterelemente durchtretende Luft unmittelbar zu der Luftauslassöffnung gelangen.

Gemäß einer Ausführungsform stellt der Sammelbereich eine Rinne dar, die das den mindestens einen Filterkörper zumindest teilweise umgibt. Bei einem Filterkörper, der einen Hohlkörper mit durchgehender Mantel- oder Außenfläche darstellt, die durch eines oder mehrere Filterelement gebildet wird, ist der Sammelbereich vorzugsweise eine ringförmige Rinne, die um die Unterkante des Filterkörpers herum verläuft, das heißt diesen umgibt. Bei einem Filterkörper, der einen Hohlkörper darstellt, bei dem nur ein Teil der Mantel- oder Außenfläche des Hohlkörpers durch Filterelemente gebildet wird, kann die Rinne nur in dem Bereich an der Unterseite des Filterkörpers vorgesehen sein, in dem das oder die Filterelemente vorgesehen sind. Bei einer Ausführungsform des Filterkörpers, der einen V-förmig gebogenen Rahmen darstellt kann die Rinne beispielsweise nur an den Unterseiten der Schenkel des V-förmigen Rahmens vorgesehen sein.

Der Vorteil der Ausgestaltung des Sammelbereiches als Rinne besteht darin, dass Flüssigkeiten über die Länge der Rinne in diese eintreten können und im Gegensatz zu einem topfförmigen Sammelbereich eine weitere Zuleitung der Flüssigkeiten nicht notwendig ist.

Gemäß einer bevorzugten Ausführungsform umfasst die Filtereinheit eine Filterhalterung für den Filterkörper, die den Filterkörper zumindest bereichsweise umgibt. Die Filterhalterung liegt vorzugsweise in vertikaler Draufsicht auf die Filterhalterung außerhalb des Filterkörpers und/oder schneidet sich mit dem äußeren Rand des Filterkörpers. Vorzugsweise stellt der Boden der Filterhalterung den Sammelbereich der Filtereinheit dar. Der mindestens eine Filterkörper ist hierbei vorzugsweise in der Filterhalterung aufgenommen. Dies bedeutet, dass zumindest ein Teil der Höhe des Filterkörpers vorzugsweise in einem durch die Filterhalterung gebildeten Raum aufgenommen ist.

Als Filterhaltung wird hierbei der Teil der Filtereinheit bezeichnet, über den die Filtereinheit und insbesondere der Filterkörper an der Öffnung in dem Gerät mit Dunstabzugsvorrichtung, insbesondere an der Aussparung eines Kochfeldes, gehalten werden kann. Die Filterhalterung kann auch als Filterhalter bezeichnet werden. Besonders bevorzugt weist die Filterhalterung eine Wannenform mit einer Bodenöffnung auf. An der Oberkante der Außenwände der Wannenform kann eine Abkantung oder eine andere Befestigungsvorrichtung zur Befestigung der Filterhalterung an dem Gerät, insbesondere in einer Aussparung des Kochfeldes vorgesehen sein. Um die Bodenöffnung weist die wannenförmige Filterhalterung eine Innenwand auf, die sich nach oben erstreckt. Somit ist in dem Boden der Filterhalterung ein rinnenförmiger, vorzugsweise um den Filterkörper herum durchgehender Bereich gebildet, in dem Flüssigkeiten aufgenommen und gesammelt werden können. Gleichzeitig kann der Filterkörper über die Filterhalterung an dem Kochfeld lösbar befestigt werden. Somit vereinfacht sich der Aufbau der Filtereinheit, da durch die Filterhalterung gleichzeitig auch der Sammelbereich bereitgestellt wird. Die Filterhalterung kann bei dieser Ausführungsform daher auch als Sammelbehälter bezeichnet werden. Zudem liegt der Boden der Filterhalterung aufgrund der Funktion des Haltens des Filterkörpers, das in der Regel von unten erfolgt, tiefer als die Unterkante des Filterkörpers. Hierdurch kann ein zuverlässiges Abtropfen von Verunreinigungen von dem Filterkörper und insbesondere dem Filterelement in den Sammelbereich erzielt werden.

Gemäß einer bevorzugten Ausführungsform bildet zumindest ein Teil des oberen Randes des Sammelbereiches eine Überlaufkante für den Überlauf von Flüssigkeiten. Durch das Vorsehen einer Überlaufkante kann beim Eindringen einer großen Menge von Flüssigkeiten in die Filtereinheit und Ansammlung in dem Sammelbehälter ein zuverlässiges Ableiten der Flüssigkeit zu einem anderen Überlaufbehälter gewährleistet werden. Indem die Überlaufkante an dem oberen Rand des Sammelbereiches vorgesehen ist, kann aber dennoch zunächst der Raum des Sammelbereiches zum Sammeln von Flüssigkeiten verwendet werden. Erst beim Erreichen eines Füllstandes, der höher ist, als die Überlaufkante, wird die Flüssigkeit dann aus dem Sammelbereich austreten.

Vorzugsweise ist die Überlaufkante zu dem mindestens einen Filterelement beabstandet. Als zu dem Filterelement beanbstandet angeordnet wird eine Überlaufkante bezeichnet, die entweder gegenüber der Unterkante des Filterelementes nach unten versetzt liegt oder die zu dem Filterelement und vorzugsweise dem Filterkörper horizontal versetzt liegt. Im letzteren Fall kann die Überlaufkante beispielsweise in der Außenwand einer Filterhalterung vorgesehen sein, an der der Filterkörper an einer Innenwand gehalten wird. Indem die Überlaufkante zu dem Filterelement beabstandet ist, kann der Eintritt von Flüssigkeiten, die aus dem Sammelbereich über die Überlaufkante austreten zurück in das Filterelement verhindert werden.

Die Überlaufkante des Sammelbereiches wird vorzugsweise durch mindestens eine Überlauföffnung gebildet. Diese Überlauföffnungen können beispielsweise in die Außenwand einer wannenförmigen Filterhalterung eingebracht werden, an der der Filterkörper an einer Innenwand gehalten wird. Die Ausgestaltung der Überlaufkante durch das Vorsehen von Öffnungen weist den Vorteil auf, dass weiterhin eine Verbindung zwischen dem Sammelbereich und einem Teil, das oberhalb der Überlaufkante liegt, beispielsweise dem oberen Teil einer Filterhalterung mit Befestigungsvorrichtung, vorliegt und somit der Sammelbereich zusammen mit der Filterhalterung an einer Aussparung eines Kochfeldes befestigt und von diesem abgenommen werden kann.

Die Filtereinheit weist eine Abdeckung auf, die zumindest den zumindest einen Filterkörper nach oben abdeckt. Die Abdeckung stellt beispielsweise eine ebene Platte dar und kann daher auch als Abdeckplatte bezeichnet werden. Die Abdeckung besteht aus einem Material, das weder für Flüssigkeiten noch für Luft durchlässig ist. Die Abdeckung kann daher beispielsweise eine Metallplatte oder Kunststoffplatte sein. Die Abdeckung deckt zumindest den Filterkörper nach oben ab. Dies bedeutet, dass der Lufteintritt und/oder Flüssigkeitseintritt in die Oberseite des Filterkörpers verhindert wird. Eine solche Abdeckung ist insbesondere bei Ausführungsformen des Filterkörpers von Vorteil, bei denen dieser einen Hohlkörper bildet und in der Mantel- oder Außenfläche des Filterkörpers das oder die Filterelemente vorgesehen sind und die Mantel- oder Außenfläche vorzugsweise vertikal verläuft. Bei einem solchen Filterkörper ist somit in der Oberseite eine Öffnung gebildet, die von der Mantel- oder Außenfläche des Filterkörpers umgeben ist. Ohne eine Abdeckung könnten Flüssigkeiten und Luft in diese Öffnung eintreten und die Luft so nicht durch die Filterelemente gereinigt werden und die Flüssigkeiten in das Innere eines unter der Filtereinheit liegenden Gebläses eindringen und dieses beschädigen. Durch das Vorsehen einer Abdeckung kann dies verhindert werden. Gemäß einer bevorzugten Ausführungsform ist die Größe der Abdeckung größer als die Fläche der Oberseite des Filterkörpers. Hierdurch steht die Abdeckung an zumindest einer Seite über den Rand der Oberseite des Filterkörpers hinaus. Hierdurch kann beispielsweise ein Filterelement, das in dem Filterkörper so angeordnet ist, dass dieses von der Oberseite des Filterkörpers aus nach außen geneigt angeordnet ist, vor dem unmittelbaren Eintreten von Verunreinigungen und insbesondere Tropfen von Flüssigkeiten von oben geschützt werden.

Die Abdeckung liegt vorzugsweise auf dem Filterkörper auf. Die Abdeckung kann dabei mit dem Filterkörper fest verbunden sein, oder lösbar mit dem Filterkörper verbunden sein.

Gemäß einer Ausführungsform weist die Filtereinheit ein Aufsatzelement zum Aufsetzen der Unterkante des mindestens einen Filterelementes auf. Das Aufsatzelement ist entweder ein Teil des Filterkörpers oder ist an der Filterhalterung ausgebildet. Als Aufsatzelement wird eine Kante oder ein Steg bezeichnet, auf den die Unterseite des Filterelementes aufgesetzt und vorzugweise gehalten werden kann. Das Aufsatzelement ist vorzugsweise an der Außenseite des Sammelbereichs vorgesehen. Als Außenseite des Sammelbereiches wird hierbei die Seite bezeichnet, die dem Innenraum des Sammelbereiches, in dem Flüssigkeiten aufgenommen werden, abgewandt ist. Besonders bevorzugt ist das Aufsatzelement an der Seite eines Sammelbereiches vorgesehen, an der dieser dem Filterkörper zugewandt ist. Durch diese Anordnung des Aufsetzelementes kann ein Eintreten von Flüssigkeiten aus dem Sammelbereich in das Filterelement zuverlässig verhindert werden.

Die verwendete Filtereinheit kann für unterschiedliche Dunstabzugsvorrichtungen verwendet werden. Insbesondere wird die Filtereinheit aber für Dunstabzugsvorrichtungen verwendet, bei denen Luft von oben in eine Lufteinlassöffnung eingesaugt wird. Das Gebläse ist daher vorzugsweise zu der Filtereinheit nach unten versetzt angeordnet. Die Filtereinheit kann daher beispielsweise in bekannten Muldenlüftungen eingesetzt werden.

Das erfindungsgemäße Kombinationsgerät umfasst ein Kochfeld und eine Dunstabzugsvorrichtung. Insbesondere sind diese beiden Komponenten des Kombinationsgerätes als Montageeinheit, das heißt bauliche Einheit, ausgestaltet. Dies bedeutet, dass die beiden Komponenten des Kombinationsgerätes mittelbar oder unmittelbar aneinander befestigt sind und als eine Montageeinheit beispielsweise in einer Arbeitsplatte eingebaut werden können. Das Kombinationsgerät stellt somit eine zusammengebaute oder vormontierte Einheit, oder eine vormontierbare Einheit dar.

Das Kochfeld umfasst erfindungsgemäß mindestens ein Heizelement sowie vorzugsweise eine Deckplatte. Die Deckplatte deckt das mindestens eine Heizelement von oben ab. Das Heizelement kann beispielsweise ein Induktionsmodul darstellen.

Die Dunstabzugsvorrichtung umfasst erfindungsgemäß ein Gebläse sowie vorzugsweise zusätzlich eine Luftführung zur Leitung der Luft nach dem Austritt aus dem Gebläse aus dem Kombinationsgerät heraus.

Die Dunstabzugsvorrichtung ist erfindungsgemäß unterhalb des Kochfeldes und insbesondere unterhalb der Oberseite des Kochfeldes angeordnet. Wird die Oberseite des Kochfeldes, wie erfindungsgemäß bevorzugt, durch eine Deckplatte gebildet, so ist die Dunstabzugsvorrichtung unterhalb der Deckplatte angeordnet. Das Gebläse der Dunstabzugsvorrichtung kann beispielsweise zwischen zwei Heizelementen des Kochfeldes angeordnet sein oder vollständig zu den Heizelementen nach unten versetzt liegen.

Richtungsangaben, wie oben und unten, die in Zusammenhang mit dem Kombinationsgerät oder Teilen davon genannt werden, beziehen sich auf das Kombinationsgerät im zusammengebauten und eingebauten Zustand, das heißt in dem Zustand, in dem dieses beispielsweise in einer horizontalen Arbeitsplatte eingebracht ist.

Indem bei dem erfindungsgemäßen Kombinationsgerät zumindest eine erfindungsgemäße Filtereinheit verwendet wird, kann eine Reihe von Vorteilen erzielt werden. Insbesondere kann durch die erfindungsgemäße Anordnung des Sammelbereiches in der Filtereinheit ein Eintreten von Flüssigkeiten in das unterhalb des Kochfeldes liegende Gebläse einer Dunstabzugsvorrichtung verhindert werden. Zudem kann eine zuverlässige Reinigung der eingesaugten Luft sichergestellt werden, da der Filterkörper des Filterelementes so angeordnet ist, dass sich diese zwischen der Lufteinlassöffnung und der Luftauslassöffnung erstreckt. Die Filterfläche, die durch das oder die Filterelemente bereitgestellt wird, die in dem Filterkörper vorgesehen sind, kann dadurch maximiert werden.

Gemäß einer Ausführungsform umfasst das Kombinationsgerät ein Kochfeld mit mindestens einer Aussparung zum Absaugen von Luft aus dem Raum oberhalb des Kochfeldes über die mindestens eine Aussparung und die Filtereinheit ist in mindestens eine der Aussparungen von oben eingebracht.

Erfindungsgemäß ist in dem Kochfeld mindestens eine Aussparung vorgesehen. Die Aussparung kann vorzugsweise in der Deckplatte des Kochfeldes eingebracht sein.

Indem erfindungsgemäß mindestens eine Aussparung in dem Kochfeld vorgesehen ist und in dieser eine erfindungsgemäße Filtereinheit eingebracht ist, kann eine Reihe von Vorteilen erzielt werden. Zum einen kann die oder können die Aussparung(en) so in das Kochfeld eingebracht sein, dass diese in der Nähe der Heizelemente des Kochfeldes liegen und dadurch in der Nähe des Entstehungsortes der Dünste und Wrasen, die durch die Dunstabzugsvorrichtung abgesaugt werden sollen. Zudem kann bei dem Kombinationsgerät das Gebläse unmittelbar unter der Aussparung vorgesehen werden und so das Absaugen von Luft aus dem Raum oberhalb des Kochfeldes weiter verbessert werden. Insbesondere bei einer solchen Anordnung des Gebläses ist die erfindungsgemäß verwendete Filtereinheit von Vorteil. Durch den Sammelbereich, der an der Filtereinheit so vorgesehen ist, dass dieser den Filterkörper zumindest bereichsweise umgibt, und unter der Lufteinlassöffnung der Filtereinheit liegt, werden hierbei nämlich auch versehentlich eintretende Flüssigkeiten, wie übergelaufene Speisen, zuverlässig in der Filtereinheit aufgenommen und das Gebläse der Dunstabzugsvorrichtung damit geschützt. Indem die Filtereinheit schließlich von oben in die Aussparung des Kochfeldes eingebracht ist, kann diese auf einfache Weise, beispielsweise zu Reinigungszwecken entnommen werden.

Gemäß einer bevorzugten Ausführungsform umfasst das Kombinationsgerät einen Überlaufbehälter, der zumindest einen Teil des Sammelbereiches umgibt. Als den Sammelbereich umgebend wird ein Überlaufbehälter bezeichnet, der zumindest teilweise unterhalb des Sammelbereiches angeordnet ist und der in vertikaler Projektion des Sammelbereiches auf den Überlaufbehälter zumindest bereichsweise über zumindest einen seitlichen Rand des Sammelbereiches hinausragt. Vorzugsweise stellt der Überlaufbehälter eine Wanne dar, in deren Boden eine Durchlassöffnung vorgesehen ist, die von einer Schutzwand umgeben ist. Der Überlaufbehälter wird damit vorzugsweise im unteren Bereich durch zumindest eine Rinne gebildet. Die Rinne kann eine umlaufende Rinne darstellen. Bei einem Filterkörper, der nur an zwei Seiten von einem Sammelbehälter umgeben ist, kann der Überlaufbehälter aber auch mit nur zwei Rinnen ausgestaltet sein.

Vorzugsweise umgibt der Überlaufbehälter zumindest den Teil des Sammelbereiches, an dem eine Überlaufkante gebildet ist. Hierdurch kann ein zuverlässiges Zuführen von Flüssigkeiten, die aus dem Sammelbereich über die Überlaufkante überlaufen, zu dem Überlaufbehälter sichergestellt werden.

Der Überlaufbehälter stellt vorzugsweise ein zu der Filtereinheit separat ausgestaltetes Bauteil dar und ist mit dem Kombinationsgerät fest verbunden. Der Überlaufbehälter kann beispielsweise auf das Gebläsegehäuse des Gebläses der Dunstabzugsvorrichtung aufgesetzt sein. Alternativ ist es aber auch möglich, dass der Überlaufbehälter an dem Kochfeld, beispielsweise der Unterseite des Kochfeldes vorgesehen und dort gegebenenfalls befestigt ist. Der Überlaufbehälter ist in dem Kombinationsgerät vorzugsweise so angeordnet, dass dieser oberhalb des Gebläses der Dunstabzugsvorrichtung angeordnet ist, oder dieses zumindest teilweise umgibt. Die Filtereinheit ist mit dem Kombinationsgerät lösbar verbunden und kann beispielsweise in eine Aussparung des Kochfeldes eingebracht und dort lösbar gehalten sein. Es liegt aber auch im Rahmen der Erfindung, dass die Filtereinheit über die Aussparung in den Überlaufbehälter eingebracht wird und auf einem Teil des Überlaufbehälters, beispielsweise der Oberkante einer eine Durchlassöffnung umgebenden Schutzwand aufliegt und so gehalten wird. Indem der Überlaufbehälter ein separates Bauteil darstellt, das in das Kombinationsgerät eingebracht werden kann, kann dessen Größe und Position so gewählt werden, dass ein zuverlässigere Schutz des Gebläses der Dunstabzugsvorrichtung gegen den Eintritt von Flüssigkeiten gewährleistet ist. Bei einem auf einem Boden eines Gerätegehäuses des Kombinationsgerätes angebrachten Gebläse würde die Verwendung des Bodens als Überlaufbehälter zu einem Eintritt der darin gesammelten Flüssigkeiten in das Gebläse führen und diese so beschädigen.

Gemäß einer Ausführungsform weisen der Sammelbereich und der Überlaufbehälter jeweils eine Rinnenform auf. Hierbei kann der Sammelbereich durch die Rinnenform gebildet sein, während die Rinnenform an dem Überlaufbehälter beispielsweise nur im unteren Bereich des Überlaufbehälters ausgebildet ist. Die Breite der Rinne des Überlaufbehälters ist hierbei vorzugsweise größer als die Breite der Rinne des Sammelbereiches. Hierdurch kann das Zuführen von Flüssigkeiten von dem Sammelbereich zu dem Überlaufbehälter sichergestellt werden.

Die Erfindung wird im Folgenden anhand der beiliegenden Figuren erneut genauer erläutert. Hierbei zeigen:
- Figur 1:: eine schematische perspektivische Draufsicht auf eine Ausführungsform des erfindungsgemäßen Kombinationsgerätes;
- Figur 2:: eine schematische Schnittansicht der Ausführungsform des erfindungsgemäßen Kombinationsgerätes entlang der Schnittlinie A - A in Figur 1;
- Figur 3:: eine schematische Schnittansicht eines Teils der Ausführungsform der erfindungsgemäß verwendeten Filtereinheit aus Figur 2; und
- Figur 4:: eine schematische Schnittansicht einer zweiten Ausführungsform der erfindungsgemäß verwendeten Filtereinheit.

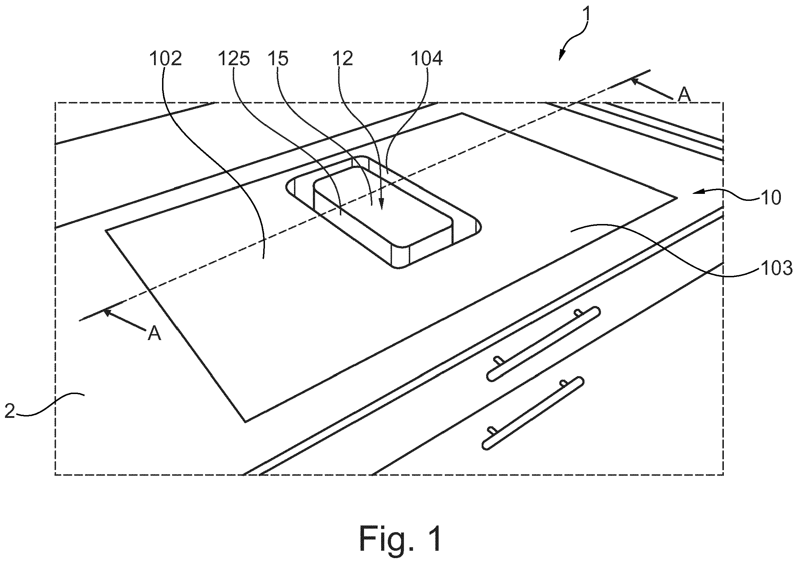

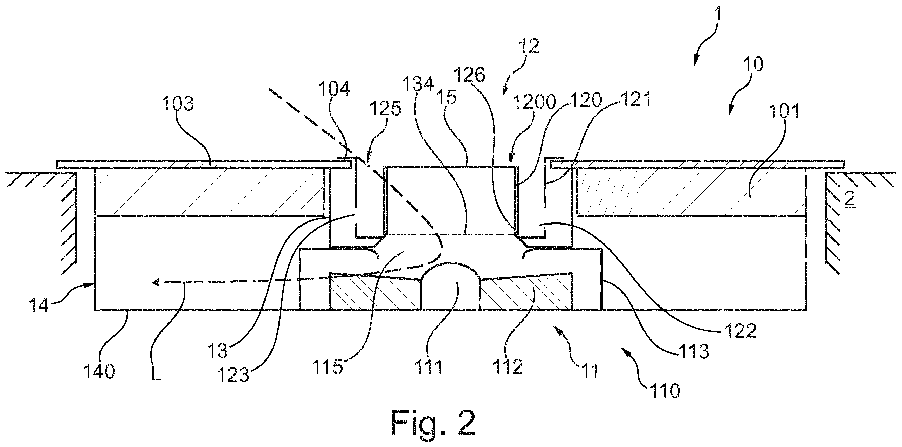

In Figur 1 ist eine Ausführungsform eines erfindungsgemäßen Kombinationsgerätes 1 gezeigt. Das Kombinationsgerät 1 umfasst ein Kochfeld 10 und eine in Figur 1 nicht sichtbare Dunstabzugsvorrichtung. Das Kombinationsgerät 1 ist in eine Arbeitsplatte 2 eingebracht. Das Kochfeld 10 ist im oberen Bereich des Kombinationsgerätes 1 angeordnet. Das Kochfeld 10 umfasst in der dargestellten Ausführungsform eine Deckplatte 103. Unterhalb der Deckplatte 103 sind Heizelemente (s. Figur 2) angeordnet. Der Bereich der Deckplatte 103, in dem unter der Deckplatte 103 ein Heizelement 101 angeordnet ist, das heißt, auf dem Gargut erwärmt werden kann, wird auch als Kochzone 102 oder Kochstelle bezeichnet.

Wie sich aus Figur 1 ergibt, ist in der Flächenmitte des Kochfeldes 10 und insbesondere in der Deckplatte 103 eine Aussparung 104 eingebracht. Die Aussparung 104 weist einen viereckigen Querschnitt auf und erstreckt sich über die Flächenmitte der Deckplatte 103. In der dargestellten Ausführungsform erstreckt sich die Aussparung 104 in Tiefenrichtung des Kombinationsgerätes 1.

In der Aussparung 104 ist eine Abdeckung 15 vorgesehen, die einen Teil der Aussparung 104 abdeckt. Die Länge und Breite der Abdeckung 15 sind bei dieser Ausführungsform geringer als die Länge und Breite der Aussparung 104. Als Länge der Aussparung 104 und der Abdeckung 15 wird die Flächenrichtung bezeichnet, die in der Tiefenrichtung des Kombinationsgerätes 1 liegt, das heißt in der Richtung zwischen Vorderseite und Rückseite des Kombinationsgerätes 1. Die Abdeckung 15 liegt in der ersten Ausführungsform in der Ebene der Deckplatte 103. Die Abdeckung 15 bildet die Oberseite eines Filterkörpers (s. Figur 2) einer in die Aussparung 104 eingebrachten Filtereinheit (s. Figur 2). Zwischen der Aussparung 104 und der Abdeckung 15 wird damit in der dargestellten Ausführungsform ein umlaufender Spalt gebildet, der die Lufteinlassöffnung 125 der Filtereinheit 12 bildet.

Unter der Aussparung 104 ist in der Figur 1 nicht sichtbar ein Gebläse der Dunstabzugsvorrichtung des Kombinationsgerätes angeordnet. Über die Lufteinlassöffnung 125 wird Luft von der Dunstabzugsvorrichtung in das Kombinationsgerät eingesaugt. Die Lufteinlassöffnung 125 der Filtereinheit 12 bildet somit auch die Ansaugöffnung des Kombinationsgerätes 1.

In Figur 2 ist die Ausführungsform des erfindungsgemäßen Kombinationsgerätes 1 nach Figur 1 schematisch in Schnittansicht gezeigt. Hierbei sind nur die in der Schnittebene liegenden Teile des Kombinationsgerätes 1 gezeigt, um die Erkennbarkeit zu verbessern. Das Kombinationsgerät 1 ist in eine Öffnung einer Arbeitsplatte 2 eingebracht. In Figur 2 ist das Gebläse 110 der Dunstabzugsvorrichtung 11, das unterhalb der Aussparung 104 in dem Kochfeld 10, insbesondere der Deckplatte 103, angeordnet ist, gezeigt. Zudem ist in Figur 2 die Filtereinheit 12, die zwischen der Aussparung 104 und dem Gebläse 110 angeordnet ist, erkennbar. Das Gebläse 110 umfasst einen Motor 111, der ein Lüfterrad 112 antreibt. Das Lüfterrad 112 und der Motor 111 sind in einem Gebläsegehäuse 113 aufgenommen. Das Gebläsegehäuse 113 weist an der nach oben gewandten Seite, das heißt der dem Kochfeld 10 zugewandten Seite eine Lufteintrittsöffnung 115 auf. Das Gebläse 110 stellt einen Radiallüfter dar, bei dem die über die Lufteintrittsöffnung 115 axial in das Gebläsegehäuse 113 eingesaugte Luft über eine Luftaustrittsöffnung (nicht gezeigt) an dem Gebläsegehäuse 113 in radialer Richtung wieder ausgegeben wird. Die Lufteintrittsöffnung 115 des Lüftergehäuses 113 ist mit der Aussparung 104 in der Deckplatte 103 so ausgerichtet, dass die Lufteintrittsöffnung 115 in vertikaler Projektion der Aussparung 104 auf die Lufteintrittsöffnung 115 vollständig in der Fläche der Aussparung 104 liegt.

Trotz dieser Ausrichtung der Lufteintrittsöffnung 115 ist diese im montierten Zustand des Kombinationsgerätes 1 für den Benutzer nicht sichtbar. Oberhalb des Gebläsegehäuses 113 ist nämlich die erfindungsgemäß verwendete Filtereinheit 12 angeordnet.

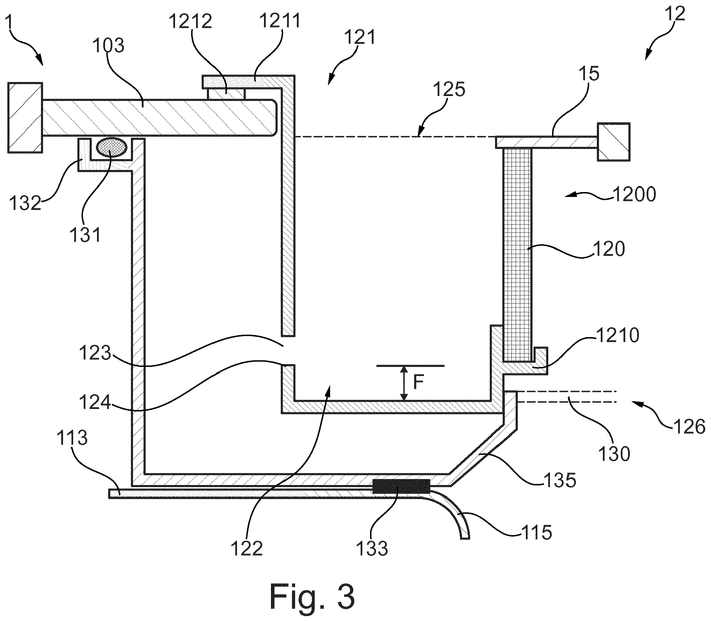

Die Filtereinheit 12, die auch in der Figur 3 genauer gezeigt ist, umfasst in der dargestellten Ausführungsform eine Filterhalterung 121 sowie einen Filterkörper 1200. Der Filterkörper 1200 kann mit der Filterhalterung 121 als eine Baueinheit ausgestaltet sein. In jedem Fall sind aber der Filterkörper 1200 und die Filterhalterung 121 miteinander verbunden. Zudem weist das Kombinationsgerät 1 einen Überlaufbehälter 13 auf.

Der Filterkörper 1200 stellt in der gezeigten Ausführungsform einen Hohlkörper dar. In dem Filterkörper 1200 ist zumindest ein Filterelement 120 gehalten. Die Filterflächen des Filterelementes 120 verlaufen vertikal. Der Filterkörper 1200 wird in der dargestellten Ausführungsform auf einem Filterhalter 121 gehalten, der eine ringförmige Wannenform aufweist. Die äußeren Wände des Filterhalters 121 sind an deren Oberseite an der Deckplatte 103 befestigt. Beispielsweise kann der Filterhalter 121 über an der Oberkante der Außenwände vorgesehene nach außen gerichtete Abkantungen 1211 am Rand der Aussparung 104 auf der Deckplatte 103 aufliegen. Die Außenwände des Filterhalters 121 weisen eine Höhe auf, die größer ist als die Höhe des Filterkörpers 1200. Somit wird im unteren Bereich des Filterhalters 121 ein Sammelbereich 122 gebildet, der unterhalb des Filterelementes 120 liegt. Insbesondere wird der Sammelbereich 122 durch die Verbindung der Außenwand des Filterhalters 121 und der Innenwand des Filterhalters 121, auf der der Filterkörper 1200 gehalten wird, gebildet und umfasst den Boden der ringförmigen Wanne des Filterhalters 121.

Auf die Oberseite des Filterkörpers 1200 ist eine Abdeckung 15 aufgebracht. Diese kann auf das Filterelement 120 aufgelegt oder in das hohl ausgestaltete Filterelement 120 zumindest teilweise eingebracht sein.

Der Sammelbereich 122 des Filterhalters 121 deckt in vertikaler Draufsicht auf das Kochfeld 10 den Spalt, das heißt die Lufteinlassöffnung 125 der Filtereinheit 12 zwischen der Abdeckung 15 und der Aussparung 104 ab, das heißt liegt unter der Lufteinlassöffnung 125..

Erfindungsgemäß kann der Filterhalter 121 auch mit dem Filterkörper 1200 einteilig ausgestaltet sein. Insbesondere können die Außenwände des Filterhalters 121, an denen vorzugsweise Abkantungen 1211 zur Befestigung an dem Kochfeld 10 vorgesehen sind, der Sammelbereich 122, der den Boden der Filterhalterung 121 darstellt, sowie ein Rahmen, in dem das oder die Filterelemente 120 aufgenommen sind, als ein Teil ausgebildet sein. Die Filterelemente 120 können dabei an dem Rahmen beispielsweise durch die in Figur 3 gezeigten Absatzelemente 1210 gehalten werden, das heißt auf diese eingesetzt oder in diese eingeschoben werden. In diesem Fall bilden der Rahmen und die Filterelemente 120 den Filterkörper 1200. Es ist allerdings auch möglich, dass der Filterkörper 1200 zu dem Filterhalter 121 separat ausgestaltet ist. In diesem Fall kann der Filterkörper 1200 beispielsweise in den vorzugsweise wannenförmigen Filterhalter 121 eingesetzt werden. Auch bei dieser Ausführungsform kann der Filterkörper 1200 einen Rahmen, beispielsweise mit Absatzelementen 1210 für das Filterelement 120 aufweisen. Gemäß einer weiteren Ausführungsform ist es aber auch möglich, dass der Filterkörper 1200 ausschließlich aus dem oder den Filterelementen 120 gebildet ist. In diesem Fall sind die Filterelemente 120 so geformt oder angeordnet, dass diese einen Hohlkörper bilden, der nach oben und unten offen ist und beispielsweise einen runden oder rechteckigen Querschnitt aufweist. Auch bei dieser Ausführungsform wird auf das Filterelement 120 vorzugsweise eine Abdeckung 15 aufgesetzt.

In der in Figur 3 genauer gezeigten Ausführungsform ist der Filterkörper 1200 durch das Filterelement 120 gebildet. Der Filterkörper 1200 beziehungsweise das Filterelement 120 wird auf dem Filterhalter 121 gehalten. Hierzu ist an der Außenseite der Innenwand des Filterhalters 121, die die Luftauslassöffnung 126 der Filtereinheit 12 umgibt, ein Absatzelement 1210 vorgesehen, das sich in die Luftauslassöffnung 126 erstreckt. Das Filterelement 120 ist auf dieses Absatzelement 1210 aufgesetzt und wird durch einen Steg am freien Ende des Absatzelementes 1210 an diesem gehalten. An der Außenwand des Filterhalters 121 ist an der Oberkante eine Abkantung 1211 vorgesehen, die nach außen gerichtet ist und zum Einhängen der Filtereinheit 12 an der Aussparung 104 des Kochfeldes 10 dienen kann. Im unteren Bereich der Außenwand des Filterhalters 121 sind eine oder mehrere Überlauföffnungen 123 eingebracht. Die untere Kante der Überlauföffnung 123 bildet die Überlaufkante 124 über die Flüssigkeiten zu dem Überlaufbehälter 13 gelangen können. Die Überlauföffnungen 123 sind in einer Höhe eingebracht, die in der Höhe der Oberkante der Innenwand des Filterhalters 121 liegt, oder dazu nach unten versetzt ist. Hierdurch wird sichergestellt, dass die Höhe in der die Überlauföffnungen 123 über dem Boden der Filterhalterung 121 eingebracht sind, die maximale Füllstandshöhe F des Sammelbereiches 122 definiert.

Zwischen dem Filterhalter 121 und dem Gebläsegehäuse 113 ist in der dargestellten Ausführungsform ein Überlaufbehälter 13 vorgesehen. Der Überlaufbehälter 13 weist ebenfalls eine ringförmige Wannenform auf. Der Überlaufbehälter 13 weist eine größere Breite auf, als der Filterhalter 121. Der Filterhalter 121 ist in dem Überlaufbehälter 13 zumindest in dessen unteren Bereich, in dem der Sammelbereich 122 gebildet ist, aufgenommen. Der Überlaufbehälter 13 ist tiefer in dem Kombinationsgerät 1 angeordnet, als der Filterhalter 121. Hierdurch besteht zwischen dem Boden des Überlaufbehälters 13 und dem Sammelbereich 122 des Filterhalters 121 ein Abstand. Zumindest dieser Abstand dient zur Aufnahme von Flüssigkeiten.

Die Filtereinheit 12 ist lösbar an dem Kombinationsgerät 1 befestigt. Beispielsweise kann die Filtereinheit 12 in die Aussparung 104 eingeführt und dort eingehängt werden. Der Überlaufbehälter 13 kann lösbar mit dem Kombinationsgerät 1 verbunden sein. So kann der Überlaufbehälter 13 beispielsweise lose auf das Gebläsegehäuse 113 aufgesetzt werden oder in die Aussparung eingehängt werden. Die mittlere Durchlassöffnung 134, die sich durch die Ringform des Überlaufbehälters 13 ergibt, ist dabei mit der Lufteintrittsöffnung 115 des Gebläsegehäuses 113 ausgerichtet. Die Durchlassöffnung 134 ist von einer sich nach oben erstreckenden Schutzwand 135 umgeben. In der Durchlassöffnung 134 des Überlaufbehälters 13, kann ein Eingriffsschutzgitter 130 vorgesehen sein. Allerdings ist es auch möglich und bevorzugt den Überlaufbehälter 13 fest, beispielsweise mit der Deckplatte 103 oder dem Gebläsegehäuse 113 zu verbinden.

Zwischen der Filtereinheit 12 und dem Kochfeld kann eine Dichtung, beispielsweise ein Dichtring 1212 vorgesehen sein. Dieser kann um die Aussparung 104 herum gelegt sein und auf diesen Dichtring 1212 kann beispielsweise die Abkantung 1211 des Filterhalters 121 aufgelegt werden. Zudem sind in Figur 3 auch Dichtungen 131 und 133 gezeigt, mittels derer der Überlaufbehälter 13 zu anderen Elementen des Kombinationsgerätes 1 abgedichtet wird. Durch die an der Oberkante des Überlaufbehälters 13, insbesondere in einem Dichtschlitz 132 aufgenommene Dichtung 131, die einen Dichtring darstellen kann, wird der Überlaufbehälter 13 gegen die Deckplatte 103 des Kochfeldes 10 abgedichtet.

Durch die Dichtung 133, die an der Unterseite des Überlaufbehälters 13 vorgesehen ist, wird die Unterseite des Überlaufbehälters 13 gegen das Gebläsegehäuse 113 abgedichtet. Durch das Vorsehen von Dichtungen kann zum einen ein unkontrollierter Eintritt von Flüssigkeiten in das Kombinationsgerät 1 verhindert werden und zum anderen kann die Luftführung von der Lufteinlassöffnung 125 zu dem Gebläse 110 sichergestellt werden.

Als ringförmige Wannenform, die der Filterhalter 121 und der Überlaufbehälter 13 vorzugsweise besitzen, wird sowohl eine in der Draufsicht runde Form als auch eine viereckige Form verstanden. Die Form des Filterhalters 121 und des Überlaufbehälters 13 werden entsprechend der Form der Aussparung 104 gewählt.

In der Ausführungsform nach Figur 2 ist auch ein Gerätegehäuse 14 des Kombinationsgerätes 1 vorgesehen, in dem die Dunstabzugsvorrichtung 11 und das Kochfeld 10 aufgenommen sind. In der dargestellten Ausführungsform sind die Heizelemente 101 des Kochfeldes 10 in dem Gerätegehäuse 14 aufgenommen und das Gerätegehäuse 14 wird von oben durch die Deckplatte 103 abgedeckt. In dem Gerätegehäuse 14 ist zudem die Dunstabzugsvorrichtung 11 vorgesehen. Von der Dunstabzugsvorrichtung 11 ist in Figur 2 lediglich das Gebläse 110 zu sehen. Das Gebläse 110 ist auf dem Geräteboden 140 des Gerätegehäuses 14 befestigt.

Alternativ zu der gezeigten Ausführungsform, bei der das Kochfeld 10 und die Dunstabzugsvorrichtung 11 in einem Gerätegehäuse 14 aufgenommen sind, ist es erfindungsgemäß auch möglich und bevorzugt das Kombinationsgerät 1 ohne Gerätegehäuse 14 auszuführen. Bei einer solchen Ausführungsform kann dann beispielsweise die Oberseite des Gebläses 110, beispielsweise die Seite in der die Lufteintrittsöffnung 115 vorgesehen ist, in dem Bereich, der außerhalb der Lufteintrittsöffnung 115 liegt, an der Unterseite des Kochfeldes, insbesondere eines Kochfeldgehäuses (nicht gezeigt) befestigt sein.

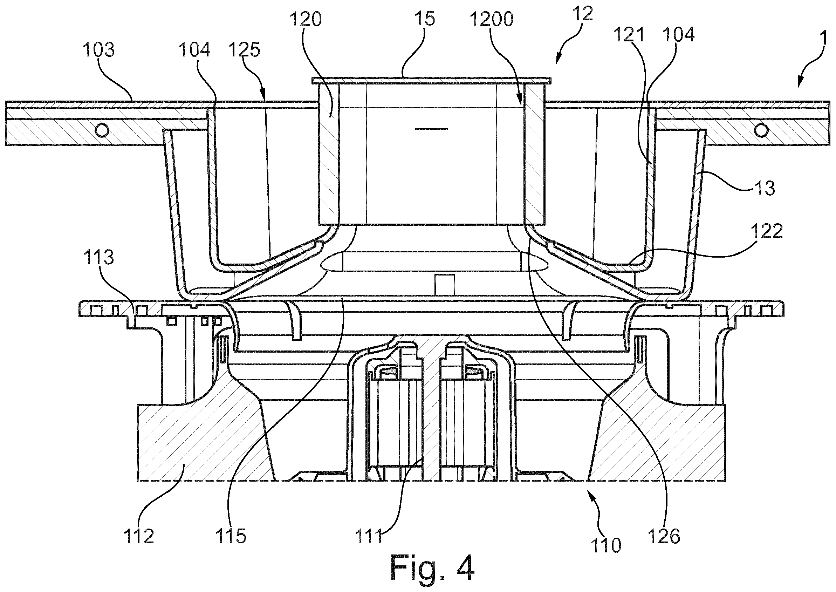

Bei der in Figur 4 gezeigten dieser Ausführungsform ist im Gegensatz zu der ersten Ausführungsform nach Figuren 1 bis 3, die Abdeckung 15 auf einer Höhe vorgesehen, die über der Ebene der Oberseite des Kochfeldes 10, insbesondere der Deckplatte 103 liegt. Zudem sind die Innenwände der Filterhalterung 121 in dieser Ausführungsform als geneigte Flächen ausgebildet. Und das Filterelement ist auf der Innenwand der Filterhalterung aufgesetzt.

Die Funktion des Kombinationsgerätes 1 und der Filtereinheit 12 wird nun erneut beschrieben.

In dem Gebläse 110 wird durch einen Motor 111 das Lüfterrad 112 angetrieben. Hierdurch wird Luft über die nach oben und damit dem Kochfeld 10 zugewandte Lufteintrittsöffnung 115 des Gebläsegehäuses 113 in das Gebläsegehäuse 113 eingesaugt. Die Luft wird hierbei von oberhalb des Kochfeldes 10 durch die Aussparung 104 in das Kombinationsgerät 1 eingesaugt. Insbesondere tritt die Luft durch die Lufteinlassöffnung 125 der Filtereinheit 12 zwischen dem Rand der Aussparung 104 und der Abdeckung 15 in das Kombinationsgerät 1 ein und wird zu der Lufteintrittsöffnung 115 des Gebläses 110 gesaugt. Dabei durchtritt der angesaugte Luftstrom L das Filterelement 120 von außen nach innen. Die so gereinigte Luft wird über eine Luftaustrittsöffnung (nicht gezeigt) des Gebläsegehäuses 113 ausgeblasen und gelangt von dort entweder mittelbar über einen Austrittskanal (nicht gezeigt) oder unmittelbar zu einem Luftauslass (nicht gezeigt) des Gerätegehäuses 14. Von dort kann die Luft in die Umgebung oder in den Raum, in dem das Kombinationsgerät 1 betrieben wird abgegeben werden.

Flüssigkeiten, wie Wasser und Fett, die an dem Filterelement 120 aus der Luft abgeschieden werden, können in dem Filterelement 120 nach unten laufen. Da der Filterkörper 1200 mit dem mindestens einen Filterelement 120 auf einem Filterhalter 121 gehalten wird, der unterhalb des Filterkörpers 1200 einen Sammelbereich 122 aufweist, kann die Flüssigkeit dort gesammelt werden und gelangt nicht in das Gebläse 110. Wird entweder an dem Filterelement 120 eine große Menge von Flüssigkeiten abgeschieden oder tritt Flüssigkeit über die Lufteintrittsöffnung 125 in großen Mengen in das Kombinationsgerät 1 ein, beispielsweise beim Überkochen von Speisen, so füllt sich zunächst der Sammelbereich 122 der Filtereinheit 12. In der Filtereinheit 12, insbesondere in der Außenwand des Filterhalters 121 sind Überlauföffnungen 123 eingebracht. Über diese läuft die Flüssigkeit in den um die Filtereinheit 12 vorgesehenen Überlaufbehälter 13.

Obwohl die Erfindung im Wesentlichen unter Bezugnahme auf vertikal verlaufende Filterelemente 120 beschrieben wurde, versteht es sich, dass auch andere Filterelemente 120, wie beispielsweise horizontal liegende oder geneigte Filterelemente verwendet werden können.

Mit der vorliegenden Erfindung wird eine Lösung geschaffen, bei der das Gebläse der Dunstabzugsvorrichtung direkt unter der Aussparung in dem Kochfeld angeordnet sein kann. Vorzugsweise wird die Aussparung rechteckig ausgeführt und weist eine Längserstreckung in der Tiefenrichtung des Kochfeldes auf. Hierdurch verläuft die Aussparung und damit der der Bereich der Ansaugung entlang der Kochzonen des Kochfeldes.

Die Filtereinheit mit dem Filterelement, das auch als Fettfilter bezeichnet werden kann, ist vorzugsweise von dem Kombinationsgerät abnehmbar.

Vorzugsweise ist ein Sammelbereich für Flüssigkeiten, der auch als Flüssigkeitsbehälter bezeichnet werden kann, vorgesehen. In diesem Sammelbereich können Fett oder Wasser, das in den Spalt zwischen Abdeckung und Aussparung eindringt, abgefangen und gesammelt werden. Der Flüssigkeitsbehälter ist vorzugsweise von dem Kombinationsgerät abnehmbar.

Für den Fall von einer zu großen Menge an Flüssigkeit, die durch den Spalt eintritt, ist vorzugsweise mindestens eine Überlauföffnung, die auch als Überflussloch bezeichnet werden kann, an dem Sammelbereich vorgesehen, so dass diese Flüssigkeit in einen Überlaufbehälter fließen kann. Der Überlaufbehälter ist vorzugsweise fest in dem Kombinationsgerät montiert und wird daher auch als statischer Behälter bezeichnet. Der statische Behälter kann zwar vorzugsweise nicht abmontiert werden, kann aber von Hand gereinigt werden oder von unten, über eine Öffnung entleert werden.

Das Filterelement, der Sammelbereich und der Deckel können eine einzige Einheit sein. Alternativ ist es aber auch möglich, dass nur der Deckel und der Sammelbereich einen eine Einheit bilden.

Die vorliegende Erfindung weist eine Reihe von Vorteilen auf. Insbesondere ist aufgrund der mit der erfindungsgemäß verwendeten Filtereinheit möglichen Positionierung des Gebläses unter der Aussparung und der Ausrichtung der Lufteintrittsöffnung nach oben, gegebenenfalls nur ein Gebläse erforderlich ist. Dieses Gebläse kann größer sein, sich langsamer drehen und somit weniger Geräusche erzeugen. Zudem kann das Gebläse durch die Filtereinheit und gegebenenfalls einen Überlaufbehälter geschützt werden.

### BEZUGSZEICHEN

- 1: Kombinationsgerät

- 10: Kochfeld
- 101: Heizelement
- 102: Kochzone
- 103: Deckplatte
- 104: Aussparung

- 11: Dunstabzugsvorrichtung
- 110: Gebläse
- 111: Motor
- 112: Lüfterrad
- 113: Lüftergehäuse
- 115: Lufteintrittsöffnung

- 12: Filtereinheit
- 1200: Filterkörper
- 120: Filterelement
- 121: Filterhalterung
- 1210: Aufsatzelement
- 1211: Abkantung
- 1212: Dichtung
- 122: Sammelbereich
- 123: Überlauföffnung
- 124: Überlaufkante
- 125: Lufteinlassöffnung
- 126: Luftauslassöffnung

- 13: Überlaufbehälter
- 130: Eingriffsschutzgitter
- 131: Dichtung
- 132: Dichtungsschlitz
- 133: Dichtung
- 134: Durchlassöffnung
- 135: Schutzwand

- 14: Gerätegehäuse
- 140: Geräteboden

- 15: Abdeckung

- 2: Arbeitsplatte

- F: Füllhöhe

- L: Luftstrom

## Patentansprüche

1. Kombinationsgerät mit einem Kochfeld und einer unterhalb des Kochfeldes angeordneten Dunstabzugsvorrichtung (11), und zumindest einer Filtereinheit für die Dunstabzugsvorrichtung (11), die mindestens einen Filterkörper (1200) mit mindestens einem Filterelement (120) und mindestens einen Sammelbereich (122) für Flüssigkeiten umfasst, **dadurch gekennzeichnet, dass** die Filtereinheit (12) eine Abdeckung (15) aufweist, die zumindest den zumindest einen Filterkörper (1200) nach oben abdeckt und an der Filtereinheit (12) im oberen Bereich eine Lufteinlassöffnung (125) gebildet ist, die zum Einlass von Luft, die von der Dunstabzugsvorrichtung (11) angesaugt wird, dient und die den mindestens einen Filterkörper (1200) zumindest teilweise umgibt, dass in der Unterseite der Filtereinheit (12) eine Luftauslassöffnung (126) vorgesehen ist, die zum Auslass von Luft von der Filtereinheit (12) zu der Dunstabzugsvorrichtung (11) dient, wobei der Filterkörper (1200) des Filterelementes so angeordnet ist, dass sich dieser zwischen der Lufteinlassöffnung (125) und der Luftauslassöffnung (126) erstreckt, und dass der Sammelbereich (122) unterhalb des mindestens einen Filterkörpers (1200) liegt und den mindestens einen Filterkörper (1200) zumindest teilweise umgibt.

2. Kombinationsgerät nach Anspruch 1, **dadurch gekennzeichnet, dass** das mindestens eine Filterelement (120) in der Filtereinheit (12) in einer Richtung liegt, die zu der Horizontalen geneigt ist, und vorzugsweise, dass das mindestens eine Filterelement (120) in der Filtereinheit (12) in vertikaler Richtung liegt.

3. Kombinationsgerät nach Anspruch 2, **dadurch gekennzeichnet, dass** der Filterkörper (1200) einen zumindest nach unten offenen Hohlkörpers bildet, dessen Querschnitt vorzugsweise rund oder viereckig ist und in dessen Unterseite die Luftauslassöffnung (126) der Filtereinheit (12) bildet.

4. Kombinationsgerät nach einem der Ansprüche 1 bis 3, **dadurch gekennzeichnet, dass** die Filtereinheit (12) eine Filterhalterung (121) für den Filterkörper (1200) umfasst, die den Filterkörper (1200) zumindest bereichsweise umgibt, der Sammelbereich (122) den Boden der Filterhalterung (121) darstellt, und der mindestens eine Filterkörper (1200) in der Filterhalterung (121) aufgenommen ist.

5. Kombinationsgerät nach einem der Ansprüche 1 bis 4, **dadurch gekennzeichnet, dass** zumindest ein Teil des oberen Randes des Sammelbereiches (122) eine Überlaufkante (124) für den Überlauf von Flüssigkeiten bildet und die Überlaufkante (124) zu dem mindestens einen Filterelement (120) beabstandet ist.

6. Kombinationsgerät nach einem der Ansprüche 1 bis 5, **dadurch gekennzeichnet, dass** die Filtereinheit (12) eine Abdeckung (15) aufweist, die zumindest den zumindest einen Filterkörper (1200) nach oben abdeckt und vorzugsweise auf dem Filterkörper (1200) aufliegt.

7. Kombinationsgerät nach einem der Ansprüche 1 bis 6, **dadurch gekennzeichnet, dass** das Kombinationsgerät ein Kochfeld (10) mit mindestens einer Aussparung (104) zum Absaugen von Luft aus dem Raum oberhalb des Kochfeldes (10) über die mindestens eine Aussparung (104) umfasst und die Filtereinheit (12) in mindestens eine der Aussparungen (104) von oben eingebracht ist.

8. Kombinationsgerät nach einem der Ansprüche 1 bis 7, **dadurch gekennzeichnet, dass** das Kombinationsgerät (1) einen Überlaufbehälter (13) umfasst, der zumindest einen Teil des Sammelbereiches (122) umgibt, vorzugsweise zumindest den Teil des Sammelbereiches (122), an dem eine Überlaufkante (124) gebildet ist, umgibt.

9. Kombinationsgerät nach Anspruch 8, **dadurch gekennzeichnet, dass** der Überlaufbehälter (13) fest mit dem Kombinationsgerät (1) verbunden ist und vorzugsweise, dass die Filtereinheit (12) lösbar mit dem Kombinationsgerät (1) verbunden ist.

## Claims

1. Combination appliance having a cooktop and a fume extraction device (11) arranged below the cooktop, and at least one filter unit for the fume extraction device (11), which filter unit comprises at least one filter body (1200) which has at least one filter element (120) and at least one collecting region (122) for liquids, **characterised in that** the filter unit (12) has a cover (15) which at least covers the at least one filter body (1200) at the top and an air inlet opening (125) is formed on the filter unit (12) in the upper region, which air inlet opening serves to let in air that is suctioned by the fume extraction device (11) and which air inlet opening at least partially surrounds the at least one filter body (1200), that an air outlet opening (126) is provided in the bottom side of the filter unit (12), which air outlet opening serves to let air out of the filter unit (12) to the fume extraction device (11), wherein the filter body (1200) of the filter element is arranged such that said filter body (1200) extends between the air inlet opening (125) and the air outlet opening (126) and that the collecting region (122) lies below the at least one filter body (1200) and at least partially surrounds the at least one filter body (1200).

2. Combination appliance according to claim 1, **characterised in that** the at least one filter element (120) in the filter unit (12) is located in a direction which is inclined relative to the horizontal and preferably that the at least one filter element (120) in the filter unit (12) is located in the vertical direction.

3. Combination appliance according to claim 2, **characterised in that** the filter body (1200) forms a hollow body which is open at least at the bottom, the cross section thereof preferably being round or quadrangular and forming in the lower face thereof the air outlet opening (126) of the filter unit (12).

4. Combination appliance according to one of claims 1 to 3, **characterised in that** the filter unit (12) comprises a filter holder (121) for the filter body (1200), which at least partially surrounds the filter body (1200), the collecting region (122) is constituted by the bottom of the filter holder (121) and the at least one filter body (1200) is received in the filter holder (121).

5. Combination appliance according to one of claims 1 to 4, **characterised in that** at least one part of the upper edge of the collecting region (122) forms an overflow edge (124) for the overflow of liquids and the overflow edge (124) is spaced apart from the at least one filter element (120).

6. Combination appliance according to one of claims 1 to 5, **characterised in that** the filter unit (12) has a cover (15) which at least covers the at least one filter body (1200) at the top and preferably bears against the filter body (1200).

7. Combination appliance according to one of claims 1 to 6, **characterised in that** the combination appliance comprises a cooktop (10) having at least one recess (104) for extracting air from the space above the cooktop (10) via the at least one recess (104), and the filter unit (12) is incorporated from above in at least one of the recesses (104).

8. Combination appliance according to one of claims 1 to 7, **characterised in that** the combination appliance (1) comprises an overflow container (13) which surrounds at least a part of the collecting region (122), preferably surrounds at least the part of the collecting region (122) on which an overflow edge (124) is formed.

9. Combination appliance according to claim 8, **characterised in that** the overflow container (13) is fixedly connected to the combination appliance (1) and preferably that the filter unit (12) is releasably connected to the combination appliance (1).

## Revendications

1. Appareil combiné avec une table de cuisson et un dispositif d'évacuation des émanations (11) disposé en dessous de la table de cuisson, et au moins une unité filtrante pour le dispositif d'évacuation des émanations (11), laquelle comprend au moins un corps filtrant (1200) avec au moins un élément filtrant (120) et au moins une zone de collecte (122) des liquides, **caractérisé en ce que** l'unité filtrante (12) comporte un recouvrement (15), qui recouvre vers le haut au moins le au moins un corps filtrant (1200) et un orifice d'entrée d'air (125) est formé sur l'unité filtrante (12) dans la zone supérieure, lequel sert d'entrée à l'air aspiré par le dispositif d'évacuation des émanations (11) et qui entoure au minimum une partie du au moins un corps filtrant (1200), **en ce qu'**un orifice de sortie d'air (126) est prévu dans le côté inférieur de l'unité filtrante (12), lequel sert à sortir l'air de l'unité filtrante (12) vers le dispositif d'évacuation des émanations (11), le corps filtrant (1200) de l'élément filtrant étant disposé de telle sorte que celui-ci s'étend entre l'orifice d'entrée d'air (125) et l'orifice de sortie d'air (126), et **en ce que** la zone de collecte (122) se situe en dessous du au moins un corps filtrant (1200) et entoure au moins une partie du au moins un corps filtrant (1200).

2. Appareil combiné selon la revendication 1, **caractérisé en ce que** le au moins un élément filtrant (120) dans l'unité filtrante (12) est situé dans un sens incliné à l'horizontale et de préférence **en ce que** le au moins un élément filtrant (120) dans l'unité filtrante (12) est situé dans le sens vertical.

3. Appareil combiné selon la revendication 2, **caractérisé en ce que** le corps filtrant (1200) forme un corps creux au moins ouvert par le bas dont la section est de préférence ronde ou carrée et dont le côté inférieur forme l'orifice de sortie d'air (126) de l'unité filtrante (12).

4. Appareil combiné selon l'une des revendications 1 à 3, **caractérisé en ce que** l'unité filtrante (12) comprend une fixation de filtre (121) pour le corps filtrant (1200) qui entoure au moins en partie le corps filtrant (1200), la zone de collecte (122) est le fond de la fixation de filtre (121) et le au moins un corps filtrant (1200) est englobé dans la fixation de filtre (121).

5. Appareil combiné selon l'une des revendications 1 à 4, **caractérisé en ce qu'**au moins une partie du bord supérieur de la zone de collecte (122) forme un bord déversoir (124) pour le déversement de liquides et le bord déversoir (124) est écarté du au moins un élément filtrant (120).

6. Appareil combiné selon l'une des revendications 1 à 5, **caractérisé en ce que** l'unité filtrante (12) comporte un recouvrement (15) qui au moins recouvre par le haut le au moins un corps filtrant (1200) et repose de préférence sur le corps filtrant (1200).

7. Appareil combiné selon l'une des revendications 1 à 6, **caractérisé en ce que** l'appareil combiné comprend une table de cuisson (10) avec au moins un évidement (104) destiné à l'évacuation d'air de la pièce au-dessus de la table de cuisson (10) par le au moins un évidement (104) et l'unité filtrante (12) est insérée d'en haut dans au moins l'un des évidements (104).

8. Appareil combiné selon l'une des revendications 1 à 7, **caractérisé en ce que** l'appareil combiné (1) comprend un réservoir de déversement (13) qui entoure la au moins une partie de la zone de collecte (122), de préférence entoure au moins la partie de la zone de collecte (122) sur laquelle un bord déversoir (124) est formé.

9. Appareil combiné selon la revendication 8, **caractérisé en ce que** le réservoir de déversement (13) est raccordé de manière inamovible à l'appareil combiné (1) et de préférence **en ce que** l'unité filtrante (12) est raccordée de manière amovible à l'appareil combiné (1).
